(19) **Europäisches Patentamt / European Patent Office / Office européen des brevets**

(11) **EP 3 701 224 B1**

(12) **EUROPEAN PATENT SPECIFICATION**

(45) Date of publication and mention
of the grant of the patent:
**12.03.2025   Bulletin 2025/11**

(21) Application number: **18789456.3**

(22) Date of filing: **26.10.2018**

(51) International Patent Classification (IPC):
**G01C 21/16** *(2006.01)*      **G01C 21/20** *(2006.01)*
**G01C 21/08** *(2006.01)*      **H04W 4/02** *(2018.01)*

(52) Cooperative Patent Classification (CPC):
**G01C 21/206; G01C 21/08; G01C 21/1654**

(86) International application number:
**PCT/EP2018/079487**

(87) International publication number:
**WO 2019/081754 (02.05.2019 Gazette 2019/18)**

(54) **ORIENTATION DETERMINATION DEVICE AND CORRESPONDING METHOD, RENDERING DEVICE AND CORRESPONDING METHOD**

VORRICHTUNG UND VERFAHREN ZUR BESTIMMUNG DER ORIENTIERUNG, WIEDERGABEVORRICHTUNG UND WIEDERGABEVERFAHREN

DISPOSITIF ET PROCÉDÉ DE DÉTERMINATION D'ORIENTATION, DISPOSITIF ET PROCÉDÉ DE RESTITUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2017   EP 17198663**

(43) Date of publication of application:
**02.09.2020   Bulletin 2020/36**

(73) Proprietors:
• **Sony Semiconductor Solutions Corporation**
**Atsugi-shi, Kanagawa 243-0014 (JP)**
• **Sony Europe Limited**
**Weybridge, Surrey KT13 0XW (GB)**
Designated Contracting States:
**AL**

(72) Inventors:
• **EITEL, Ben**
**70327 Stuttgart (DE)**
• **SCHNEIDER, Daniel**
**70327 Stuttgart (DE)**

(74) Representative: **Witte, Weller & Partner**
**Patentanwälte mbB**
**Postfach 10 54 62**
**70047 Stuttgart (DE)**

(56) References cited:
**WO-A1-2009/128859      WO-A1-2009/128859**
**US-A1- 2015 149 104      US-A1- 2015 260 524**
**US-A1- 2015 260 524      US-B1- 6 549 004**
**US-B1- 6 549 004**

**Description**

BACKGROUND

FIELD OF THE DISCLOSURE

The present disclosure relates to an orientation determination device and method for determining the orientation of the device. Further, the present disclosure relates to a rendering device and method for rendering target information.

DESCRIPTION OF RELATED ART

The use of today's widespread technologies for outdoor navigation may be problematic for indoor positioning and navigation mainly because of two reasons: GNSS (global navigation satellite system) signals are not available indoors and ferrous materials in the building construction heavily distort the geomagnetic field used for outdoor compass-based navigation. Further, in various applications, the orientation, i.e. heading and inclination (attitude), with respect to a reference coordinate system is of interest.

The "background" description provided herein is for the purpose of generally presenting the context of the disclosure. Work of the presently named inventor(s), to the extent it is described in this background section, as well as aspects of the description which may not otherwise qualify as prior art at the time of filing, are neither expressly or impliedly admitted as prior art against the present disclosure.

US 2015/260524 A1 discloses a solution comprising detecting that a positioning device is within a predetermined control area associated with a building, acquiring a first sequence of magnetic field measurements carried out by the positioning device, wherein the first sequence represents at least one of the magnitude and the direction of Earth's magnetic field; determining that an operational environment of the positioning de-vice has changed between an indoor environment and an outdoor environment when a at least one predetermined criterion with respect to the first sequence is met; and causing actuation of a predetermined software function in or with respect to the positioning device when the operational environment of the positioning device has changed.

Further prior art can be found in US 6549004 B1 and WO 2009/128859 A1.

SUMMARY

It is an object to provide an orientation determination device and method and a rendering device and method which allow/improve determining and using the orientation of the respective device. It is a further object to provide a corresponding computer program and a non-transitory computer-readable recording medium for implementing said methods.

According to the invention there is provided an orientation determination device as defined in claim 1.

According to a preferred embodiment there is provided a rendering device as defined in claim 8.

According to the invention, a corresponding method is further provided in claim 13 and a computer program is provided in claim 15.

Embodiments are defined in the dependent claims. It shall be understood that the disclosed methods, the disclosed computer program and the disclosed computer-readable recording medium have similar and/or identical further embodiments as the claimed devices and as defined in the dependent claims and/or disclosed herein.

One of the aspects of the disclosure is to estimate, for devices located in a building, the orientation of the orientation determination device with respect to a specified reference coordinate system with the use of magnetic field information that stems from the magnetic sensor and a pre-recorded magnetic map of the building (area). This way either sensor cost and/or power consumption can be reduced (e.g. since no gyroscope and/or accelerometer data are needed) or the accuracy of the orientation estimation increased in terms of a sensor fusion process (when also gyroscope and/or accelerometer data are available). This technology is especially suited for mobile and wearable battery-driven devices as the involved sensors and computations can be realized with very low power consumption. The orientation estimate can be used for a wide range of applications ranging from "enhanced" compass-like navigation (direction + distance to target) to realizing virtual sound sources (targets) in a 2D/3D area independent of the user or device position and orientation (sound sources appear in static locations independent of head orientation and user position: augmented reality (AR) sound).

The foregoing paragraphs have been provided by way of general introduction, and are not intended to limit the scope of the following claims. The described embodiments, together with further advantages, will be best understood by reference to the following detailed description taken in conjunction with the accompanying drawings.

BRIEF DESCRIPTION OF THE DRAWING

A more complete appreciation of the disclosure and many of the attendant advantages thereof will be readily obtained as the same becomes better understood by reference to the following detailed description when considered in connection with the accompanying drawings, wherein:

Fig. 1     shows a diagram illustrating coordinate definitions of a magnetic field vector,

Fig. 2     shows a schematic diagram of a first embodiment of an orientation determination device according to the present disclosure,

Fig. 3     shows a schematic diagram of a first embodiment of a rendering device according to the present disclosure,

Fig. 4     shows an exemplary magnetic map indicating the location-dependent azimuth distortion,

Fig. 5     shows a diagram illustrating device orientation,

Fig. 6     shows a schematic diagram of a second embodiment of an orientation determination device according to the present disclosure,

Fig. 7     shows a schematic diagram of a third embodiment of an orientation determination device according to the present disclosure,

Fig. 8     shows a schematic diagram of a fourth embodiment of an orientation determination device according to the present disclosure,

Fig. 9     shows a schematic diagram of a fifth embodiment of an orientation determination device according to the present disclosure,

Fig. 10    shows a schematic diagram of a sixth embodiment of an orientation determination device according to the present disclosure,

Fig. 11    shows a diagram illustrating a first application scenario of the disclosed devices and methods,

Fig. 12    shows a schematic diagram of a second embodiment of a rendering device according to the present disclosure for use in the application scenario shown in Fig. 11, and

Fig. 13    shows a schematic diagram of a third embodiment of a rendering device according to the present disclosure for use in a second application scenario.

DETAILED DESCRIPTION OF THE EMBODIMENTS

Before details of the present disclosure will be described, some definitions shall be given. The term "magnetic map" refers to either the magnetic map (comprising magnetic fingerprints) of a whole area, preferably indoors such as a building, or a sub-part of the magnetic map of the whole area, e.g. a sub-part of the building, such as a floor or a wing of the building. A magnetic map for use in the embodiments disclosed herein, or a suitable sub-part of the magnetic map, respectively, comprises magnetic fingerprints of a region around the magnetic field sensor. It can be selected based on a current position of the magnetic field sensor, for example a given position estimate and, optionally, its assumed confidence (e.g. estimated position accuracy), or by a user downloading a suitable magnetic map from a server, etc.

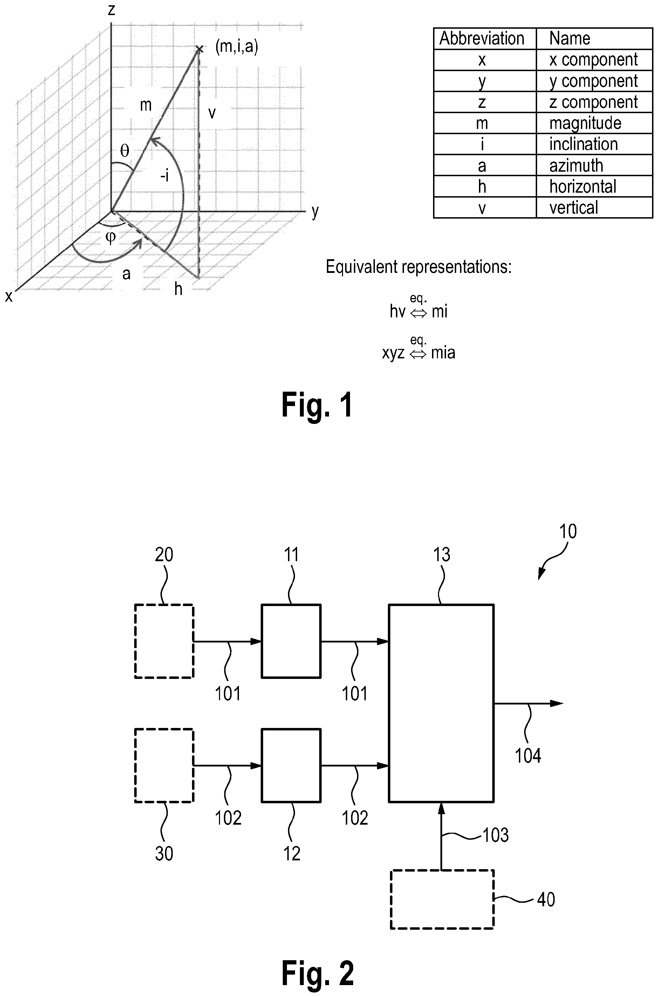

Magnetic field sensor data may, for example, be magnetic flow densities in x, y, and z directions of the magnetic field sensor's local coordinate system (i.e. in sensor coordinates) for a 3D sensor. An illustration of different representations of the magnetic field vector is shown in Fig. 1 illustrating coordinate definitions of a magnetic field vector. Example features of the magnetic field vector are magnetic field magnitude m, magnetic field inclination i, magnetic field azimuth a, magnetic field vertical component v, magnetic field horizontal component h, magnetic field Cartesian components (x, y, z) and their combinations. For example, the magnetic field vector may be represented by the feature magnetic field horizontal component h and magnetic field vertical component v. Alternatively, a representation by the feature magnetic field magnitude m and magnetic field inclination i can be used. For some situations, a further alternative representation by the magnetic field magnitude m, the magnetic field inclination i and the magnetic field azimuth a or a representation by the Cartesian components x, y and z may be chosen.

The magnitude of the geomagnetic field (sometimes also referred to as magnetic field vector) is simple to derive from a magnetic field measurement, e.g. by a magnetic field sensor, which process does generally not include any additional estimation process. Therefore, it is the most reliable information for geomagnetic fingerprinting. Unfortunately, similar magnitude values can often be found at different locations of the building, i.e. a geomagnetic field measurement can be assigned to several locations in the building with similar likelihood if only magnitude is considered and a corresponding one-dimensional feature vector is used.

The inclination of the geomagnetic field can be computed based on the magnetic field measurement and the direction of the earth's gravity field, which may be measured by an accelerometer. Aside from gravity, the accelerometer can also measure all other accelerations of the mobile/wearable device. Separation of the different acceleration sources is difficult and introduces errors to the estimation of the gravity direction. This in turn degrades the estimation accuracy of the geomagnetic field inclination. Nonetheless, this information can be used together with the magnitude of the geomagnetic field to obtain a two-dimensional feature vector for geomagnetic fingerprinting. Using the two-dimensional feature vector (fingerprint) reduces the amount of position ambiguities, as magnitude and inclination of the magnetic field are widely uncorrelated.

The azimuth information is more difficult to obtain as input for geomagnetic fingerprinting. In addition to the gravity direction an estimate of the mobile/wearable device heading may be needed, which is prone to estimation errors, especially due to the inherent drift of gyroscope sensor signal information. Consequently, the use of azimuth information for geomagnetic fingerprinting is typically limited to specific applications, e.g. for localization of robots. The sensors are typically fixed to the body of the robot which simplifies the estimation process and hence reduces the amount of estimation errors. Often, the z-coordinate is already aligned to the gravity direction, sensor heading and motion heading have a fixed relation, so that there is no need for step and step length estimation, etc.

Fig. 2 shows a schematic diagram of a first embodiment of an orientation determination device 10 according to the present disclosure.

The orientation determination device 10 comprises data input circuitry 11 configured to obtain magnetic field sensor data 101 comprising at least two magnetic field measurements sensed by one or more magnetic field sensors 20 (in this embodiment not part of the device 10) at spatially separate positions and/or in separate frequency ranges and/or at different times and/or at different codes. Generally, the magnetic field sensor data 101 have been measured in sensor coordinates. The data input circuitry 11 may be represented by a data interface, e.g. an interface (such as a HDMI, USB, network interface, etc.) for data reception or retrieval, to receive or retrieve the magnetic field sensor data 101 directly from the one or more magnetic field sensors 20 or from a storage means (e.g. a data carrier, an electronic memory, a buffer, etc.; not shown) where the magnetic field sensor data 101 are stored or buffered.

The orientation determination device 10 further comprises a position input circuitry 12 configured to obtain a position estimate 102 of the one or more positions of the one or more magnetic field sensors 20, at which the magnetic field sensor data have been acquired. The position input circuitry 12 may also be represented by a separate data interface, e.g. an interface (such as a HDMI, USB, network interface, etc.) for data reception or retrieval, to receive or retrieve the position estimate 102 e.g. from an internal or external position estimation circuitry 30, or may be combined with the data input circuitry 11 into a common interface.

The orientation determination device 10 further comprises an estimation circuitry 13 configured to derive, from a magnetic map 103, azimuth and inclination data at the one or more positions of the one or more magnetic field sensors indicated by the obtained position estimate and to estimate the orientation of the orientation determination device based on the obtained magnetic field sensor data and the azimuth and inclination data derived from the magnetic map 103. Generally, the azimuth and inclination data are available in a reference coordinate system. The magnetic map 103 is generally acquired in advance and e.g. provided by a service provider, the owner or operator of a building in which the orientation determination shall be used, etc., and may be stored in a storage means (not shown; in this embodiment not being part of the device 10) or provided by a server 40 (generally not being part of the device 10), e.g. via the internet or another network. For example, a user may download a magnetic map of a location he wants to visit, or a suitable magnetic map may be downloaded or provided automatically based on current position information of (a device comprising or connected to) the one or more magnetic field sensors 20 (like GPS information obtained before entering a building, or upon detection of a Bluetooth beacon placed at an entry of a building etc.). The estimation circuitry 13 may e.g. be implemented in hard- and/or software, e.g. an appropriately programmed processor or computer.

Thus, according to the present disclosure it is possible to determine the orientation of the orientation determination device 10 in the reference coordinate system, i.e. in 3D coordinates, without much hard- and software efforts. Particularly if the x and y axes of the magnetic field sensor(s) are lying in a horizontal plane (e.g. if the magnetic field sensor(s) is (are) attached to a mobile robot), the comparison of the sensed magnetic field's azimuth against the magnetic map azimuth at this location directly provides the absolute heading of the device with respect to the reference coordinate system used to record the magnetic map. In the more general case the device can possess an arbitrary orientation in 3D space.

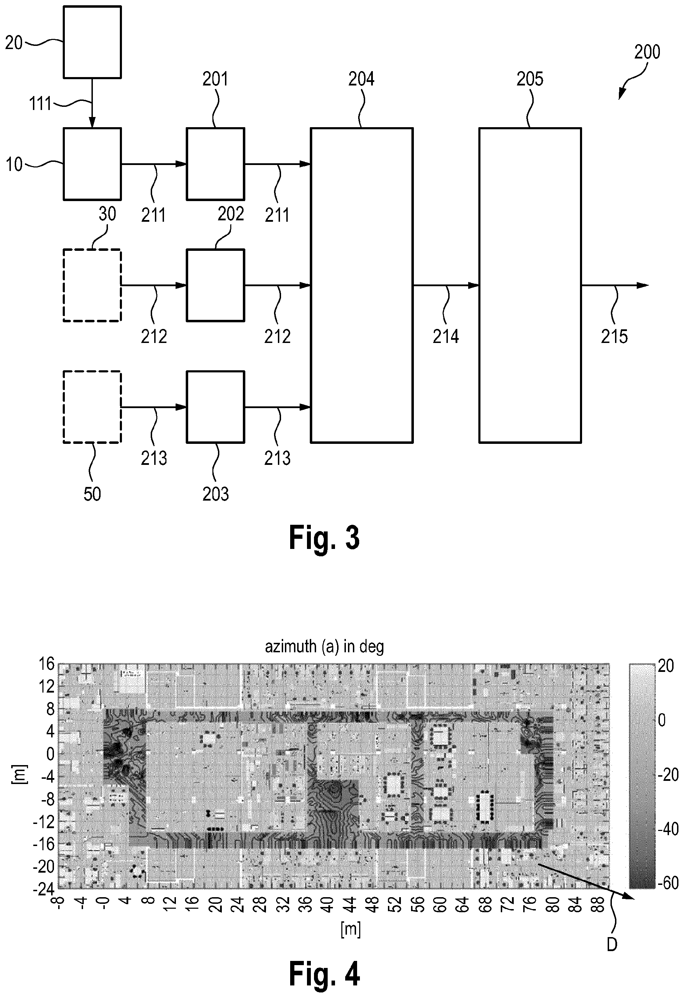

Fig. 3 shows a schematic diagram of a first embodiment of a rendering device 200 according to the present disclosure. The rendering device 200 may e.g. be a handheld device, a wearable device, a mobile phone, a smartphone, a portable phone, a camera, a smart watch, a vital signs monitor, a laptop, a tablet, smart glasses, headphones, earphones or any other portable device that may be carried around by a user.

The rendering device 200 comprises one or more magnetic field sensors 20 configured to sense magnetic field sensor data comprising at least two magnetic field measurements sensed at spatially separate positions and/or in separate frequency ranges and/or at different times and/or at different codes. The rendering device 200 further comprises an orientation determination device 10 as disclosed herein, e.g. in Fig. 2, to determine orientation information indicating the orientation of the rendering device.

The rendering device 200 further comprises an orientation input circuitry 201 configured to obtain orientation information 211 indicating the orientation of the rendering device 200. The orientation information 211 is obtained from the orientation determination device 10. The rendering device 200 further comprises a position input circuitry 202 configured to obtain a position estimate 212 of the rendering device 200, e.g. for retrieval or reception of the position estimate from an internal or external position estimation circuitry 30. The rendering device 200 further comprises a target position input circuitry 203 configured to obtain target position information 213 indicating a target position of one or more targets, e.g. from a target information storage or server 50 (generally not being part of the rendering device 200). The target may e.g. be virtual sound source, a virtual light source or any physical target, such as a certain location (e.g. a place that a user wants to reach like a certain department in a shopping mall or office building, a meeting area in a large building, a certain place of production in a large factory, etc.). The orientation input circuitry 201, the position input circuitry 202 and the target position input circuitry 203 may be represented by separate data interfaces or a common interface, e.g. an interface (such as a HDMI, USB, network interface, etc.) for data reception or retrieval.

The rendering device 200 further comprises a relative target position determination circuitry 204 configured to determine the relative position 214 of the one or more targets with respect to the rendering device 200 based on the orientation information 211, the obtained position estimate 212 and the obtained target position information 213. Finally, the rendering device 200 further comprises rendering circuitry 205 configured to render target information 215 related to the one or more targets using the determined relative position 214 of the one or more targets.

With the disclosed rendering device the heading and/or orientation, preferably including a distance and direction estimate, can be used for different applications, such as enhanced compass-like navigation to a target or realization of virtual sound sources (targets) in a 2D/3D area independent of the user or device position and orientation, i.e. the realization of sound sources that appear in static locations independent of head orientation and user position and thus give the impression of an augmented reality sound.

According to the above disclosed embodiments an estimate of the position of the magnetic field sensor (Fig. 2) and the rendering device (Fig. 3), respectively, is used. Generally, it is not relevant how this estimate is determined. Internal or external means may be provided for this purpose. In the embodiments shown in Figs. 2 and 3 position estimation circuitry 30 is provided as external component that supplies the position estimate. In other embodiments the position estimation circuitry 30 is an internal component of the heading determination device 10 and the rendering device 200, respectively.

The (external or internal) position estimation circuitry 30 may be configured to estimate the position of the one or more magnetic field sensors 20 based on non-magnetic information, e.g. from a communication system, WiFi access points or (e.g. Bluetooth) beacons or ultra-wideband systems. Geomagnetic fingerprinting using the obtained magnetic field sensor data 101 and the magnetic map 103 may also be used by the position estimation circuitry 30 provided as part of the heading determination device 10. Assuming magnetic fingerprinting for localization, at least the magnitude (and optionally the inclination) of the magnetic field should be additionally considered to obtain reliable position estimates. Alternatively or additionally inclination, horizontal and/or vertical magnetic field components (with respect to earth coordinates) can be used to improve the position estimate. Moreover, a complementary technology may be used to obtain a unique location estimate from the geomagnetic field. One possibility is to use (pedestrian) dead reckoning (PDR) based on accelerometer and gyroscope data from on-device sensors, as proposed according to another embodiment.

The location of the orientation determination device can be either obtained by some non-magnetic localization system (e.g. Wi-Fi access points, Bluetooth beacons, ultra-wideband systems) or by means of magnetic fingerprinting. Assuming magnetic fingerprinting for localization, at least the magnitude of the magnetic field should be additionally considered to obtain reliable position estimates. Alternatively or additionally inclination, horizontal and/or vertical magnetic field components (with respect to earth coordinates) can be used to improve the position estimate. Moreover, a complementary technology may be required to obtain a unique location estimate from the geomagnetic field. One possibility is to use (pedestrian) dead reckoning ((P)DR) based on accelerometer and gyroscope data from on-device sensors, as proposed according to another embodiment.

The magnetic map 103 should contain at least the location-dependent azimuth of the (distorted) magnetic field with respect to a given reference coordinate system (e.g. the earth coordinate system) to obtain a 2D heading estimate. Fig. 4 shows an example of a magnetic map recorded in an office building. Here, the coordinate reference system's heading (0 heading) is with respect to the axis of abscissae (x-axis). The example shows the distortions of the azimuth of the magnetic field (magnetic north with respect to the earth coordinates corresponds to -22° as indicated by the arrow D in Fig. 4): The compass heading of the device would be distorted if the azimuth is different from -22°.

Particularly if the x- and y-axes of the one or more magnetic field sensors 20 are known to be lying in a horizontal plane (e.g. if the one or more sensors 20 are attached to a mobile robot), the comparison of the sensed magnetic field's azimuth against the magnetic map azimuth at this location directly provides the absolute heading of the one or more sensors 20 (and of a device incorporating the one or more sensors 20, e.g. a user device such as a smartphone) with respect to the reference coordinate system used to record the magnetic map. The corresponding block diagram of the device is depicted in Fig. 3.

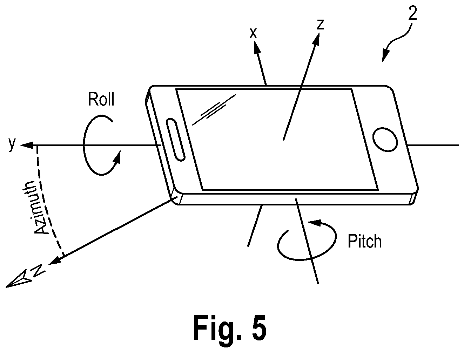

In the more general case the device (in particular the magnetic field sensor) can possess an arbitrary orientation in 3D space. Fig. 5 shows a diagram illustrating device orientation by way of a smartphone 2 embedding the disclosed rendering system. This diagram explains the definitions of the orientation by means of three angles (roll, pitch and heading). Other representations of the orientation may be possible as well (e.g. by means of a freely defined rotation axis and angle as used in the following mathematical derivations). The roll/pitch information might be used for 3D rendering information (e.g. to derive 3D positions of virtual sound sources, as will be explained in more detail below). In case only the heading information 107 is used, mainly a 2D rendering is possible.

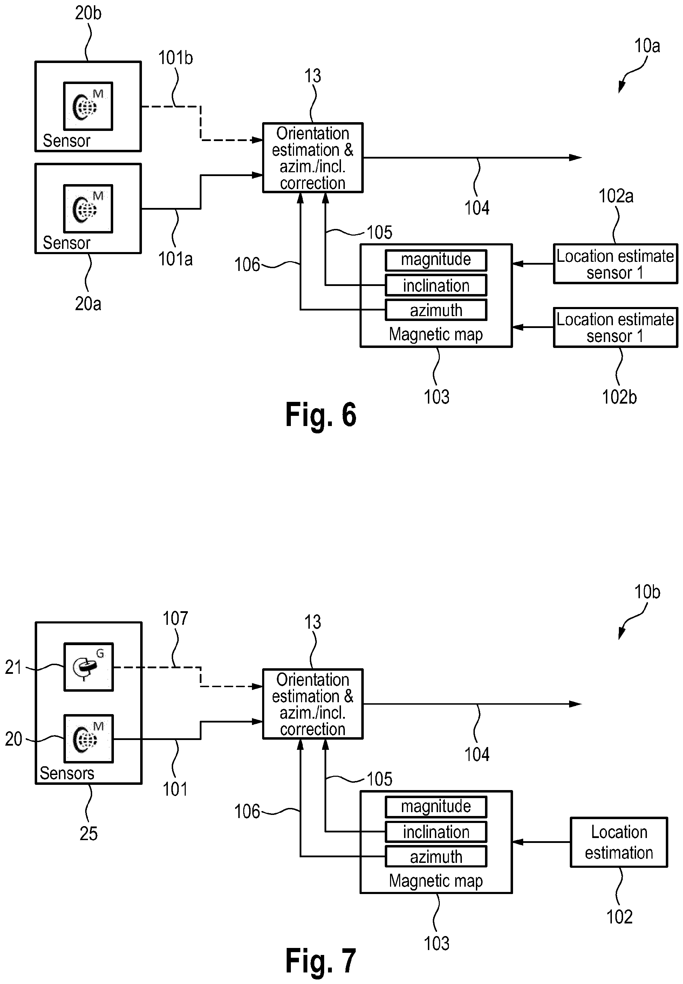

In order to estimate the 3D orientation of the device, a magnetic map that contains azimuth and inclination information of the magnetic field given with respect to a coordinate system, e.g. the earth coordinate system. Due to the rotational symmetry of a 3D magnetic field vector around its own axis a single magnetic field vector may not be sufficient to obtain the sensor's orientation. Thus, at least two 3-dimensional magnetic field vectors pointing into different directions may be used. Different options exist to obtain multiple 3D magnetic field vectors, which are used is different embodiments of an orientation determination device illustrated in Figs. 6-9. In these figures the interfaces (i.e. input circuitries 11 and 12) have been left out for simplification of the illustration.

Fig. 6 shows a schematic diagram of a second embodiment of an orientation determination device 10a according to the present disclosure. In this embodiment the 3D magnetic field is measured with at least two locally separated magnetic field sensors 20a, 20b at the same time with both sensors 20a, 20b pointing into the same direction (or with known orientation offset to each other). This can be e.g. realized by attaching both sensors to a rigid rod. Thus, two magnetic field measurements 101a, 101b are used by the estimation circuitry 13 to determine the orientation 104 of the device 10a. Position estimates 102a, 102b of the positions of the two magnetic field sensors 20a, 20b are used to select the inclination information 105 and azimuth information 106 from the magnetic map 103 at these positions for use by the estimation circuitry 13.

Fig. 7 shows a schematic diagram of a third embodiment of an orientation determination device 10b according to the present disclosure. In this embodiment the 3D magnetic field is measured with a single magnetic field sensor 20 at different time instances. The time interval between these measurements should be large enough to ensure that the position has sufficiently (e.g. more than 0.5 or 1 m) changed during this time interval. This can e.g. be achieved by ensuring that the orientation of the sensor remains fixed during the time interval or by tracking the change in orientation between both measurements, e.g. by means of a gyroscope 21, which forms a common sensor unit 25 together with the magnetic field sensor 20 and provides such tracking data 107. In order to avoid accumulating orientation estimation errors, the time interval between both measurements should be sufficiently short, for example within several seconds for today's sensors. Hereby, the allowed time frame strongly depends on sensor quality (e.g. bias) and can be in fact much longer for high quality (e.g. military application) sensors.

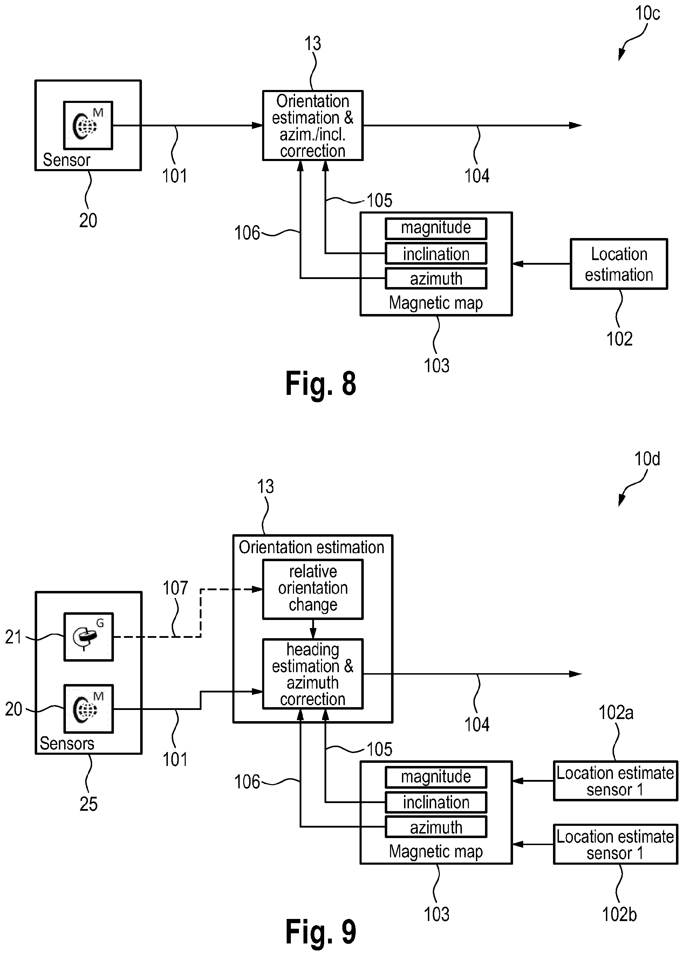

Fig. 8 shows a schematic diagram of a fourth embodiment of an orientation determination device 10c according to the present disclosure. In this embodiment multiple 3D magnetic field vectors are measured at the same time (and possibly with the same sensor 20), e.g. the geomagnetic field and a magnetic beacon signal which are separable in the frequency domain by appropriate filtering. Alternatively or additionally, multiple 3D magnetic field vectors may be measured at different times (and possibly with the same sensor 20), e.g. the geomagnetic field and one or more magnetic beacon signals, wherein the one or more beacon signals are time-multiplexed and separable in the time domain by appropriate time demultiplexing and/or by (prior or acquired) knowledge of the timing (e.g. periodicity) of the beacon signals. Still further, in an embodiment, multiple 3D magnetic field vectors may be measured at different (e.g. orthogonal) codes (and possibly with the same sensor 20), e.g. the geomagnetic field and one or more magnetic beacon signals, wherein the one or more beacon signals are code-multiplexed and separable based on the code used by appropriate code demultiplexing. In every case, for a 3D orientation estimation two vector measurements with corresponding reference vectors are generally needed, wherein the reference vectors have a different direction to avoid ambiguities in the 3D orientation estimate. This is independent of how these vectors are measured or what is causing the measured magnetic fields.

Fig. 9 shows a schematic diagram of a fifth embodiment of an orientation determination device 10d according to the present disclosure. In this embodiment a 3D orientation estimate based on two spatially or in frequency separated measurements of the magnetic field. The idea behind is to estimate the rotation matrix $R$ that maps the measured 3D magnetic field vectors onto the corresponding magnetic map 3D vector. Provided that this estimation can be performed without ambiguity, the sensor orientation 104 can be obtained from the inverse rotation $\Gamma = \boldsymbol{R}^{-1}$ of the magnetic map coordinate reference system.

There exist different ways to define a rotation in 3D space (e.g. rotation matrices or quaternions). In the following mathematical derivation the rotation is defined in terms of a normalized 3D rotation axis $\boldsymbol{n} = [n_1\ n_2\ n_3]^T$ and a rotation around $\boldsymbol{n}$ by angle $\alpha$. In Cartesian representation the corresponding rotation matrix is defined as

$$R(\boldsymbol{n},\alpha)$$
$$= \begin{bmatrix} \cos(\alpha) + n_1^2\big(1 - \cos(\alpha)\big) & n_1 n_2\big(1 - \cos(\alpha)\big) - n_3 sin(\alpha) & n_1 n_3\big(1 - \cos(\alpha)\big) + n_2 sin(\alpha) \\ n_2 n_1\big(1 - \cos(\alpha)\big) + n_3 sin(\alpha) & \cos(\alpha) + n_2^2\big(1 - \cos(\alpha)\big) & n_2 n_3\big(1 - \cos(\alpha)\big) - n_1 sin(\alpha) \\ n_3 n_1\big(1 - \cos(\alpha)\big) - n_2 sin(\alpha) & n_3 n_2\big(1 - \cos(\alpha)\big) + n_1 sin(\alpha) & \cos(\alpha) + n_3^2\big(1 - \cos(\alpha)\big) \end{bmatrix}$$

For the sake of explanation, it is assumed that only two locally (or in some other domain) separated 3D magnetic field measurements $\boldsymbol{m}_{s,1}$ and $\boldsymbol{m}_{s,2}$ (in sensor coordinates) are made where each measurement can be related to a distinct magnetic map entry $\boldsymbol{m}_{p,1}$ and $\boldsymbol{m}_{p,2}$ (in earth coordinates), respectively. The relative rotation $R(\boldsymbol{n}_{rel}, \alpha_{rel})$ between sensor measurements 1 and 2 is either fixed or can be obtained from the gyroscope. It describes the relation between both sensor measurements, i.e. how $\boldsymbol{m}_{s,2}$ is represented in the orientation of the sensor used to obtain $\boldsymbol{m}_{s,1}$:

$$\widetilde{\boldsymbol{m}}_{s,2} = R(\boldsymbol{n}_{rel}, \alpha_{rel})\boldsymbol{m}_{s,2}$$

In the most simple case, $\boldsymbol{m}_{s,1}$ and $\boldsymbol{m}_{s,2}$ are measured at the same time instant with different sensors which fixed to a rigid rod and both sensors are perfectly aligned in their axes. In this case $\boldsymbol{R}_{rel} = \boldsymbol{I}_3$.

Starting e.g. with $\tilde{\boldsymbol{m}}_{s,2}$, the rotation matrix $R(\boldsymbol{n}_2, \alpha_2)$ that maps $\tilde{\boldsymbol{m}}_{s,2}$ to $\boldsymbol{m}_{p,2}$ is computed, i.e. $\boldsymbol{m}_{p,2} = R(\boldsymbol{n}_2, \alpha_2)\tilde{\boldsymbol{m}}_{s,2}$ where

$$\boldsymbol{n}_2 = \widetilde{\boldsymbol{m}}_{s,2} \times \boldsymbol{m}_{p,2}/\big|\widetilde{\boldsymbol{m}}_{s,2} \times \boldsymbol{m}_{p,2}\big|$$

$$\alpha_2 = \cos^{-1}\big(\widetilde{\boldsymbol{m}}_{s,2}^T \boldsymbol{m}_{p,2}/\big(\big|\widetilde{\boldsymbol{m}}_{s,2}\big|\big|\boldsymbol{m}_{p,2}\big|\big)\big).$$

It should be noted that this rotation matrix still does not represent a unique solution due to the rotational symmetry of 3D vectors, in this case $\boldsymbol{m}_{p,2}$. Next, $\boldsymbol{m}_{s,1}$ is rotated according to

$$\widetilde{\boldsymbol{m}}_{s,1} = R(\boldsymbol{n}_2, \alpha_2)\boldsymbol{m}_{s,1}.$$

In most cases it will be observed that $\tilde{\boldsymbol{m}}_{s,1}$ still does not match with $\boldsymbol{m}_{p,1}$ due to the aforementioned ambiguity. Thus, the final mapping may be achieved by another rotation around the ambiguity rotation axis given by the normalized vector

$$\boldsymbol{n}_1 = -\boldsymbol{m}_{p,2}/\big|\boldsymbol{m}_{p,2}\big|\ .$$

In order to obtain the rotation angle, the projection $\boldsymbol{x}_0$ of $\boldsymbol{m}_{p,1}$ on $\boldsymbol{m}_{p,2}$ is projected:

$$\boldsymbol{x}_0 = \frac{\boldsymbol{m}_{p,2}^T \boldsymbol{m}_{p,1}}{\boldsymbol{m}_{p,2}^T \boldsymbol{m}_{p,2}} \boldsymbol{m}_{p,2},$$

and then derive the rotation angle $\alpha_1$ as the angle between the vectors $\boldsymbol{v}_S = \tilde{\boldsymbol{m}}_{s,1} - \boldsymbol{x}_0$ and

$$\boldsymbol{v}_p = \boldsymbol{m}_{p,1} - \boldsymbol{x}_0:$$

$$\alpha_1 = \cos^{-1}\big(v_s^T v_p/\big(|v_s||v_p|\big)\big).$$

Finally, multiplication of both estimated rotation matrices yields the final rotation matrix that describes the orientation of the device/sensor with respect to the reference coordinate system:

$$\Gamma = R(n_1, \alpha_1)R(n_2, \alpha_2).$$

It should be noted that the derivation above includes some degrees of freedom, e.g. one could also use $m_{s,1}$ as starting point instead of $\tilde{m}_{s,2}$ or the relative rotation $R(n_{rel}, \alpha_{rel})$ could describe how $m_{s,1}$ is represented in the orientation of the sensor used to obtain $m_{s,2}$. The subsequent computation steps will change accordingly.

If more than two magnetic field measurements and corresponding position-related magnetic map entries are available, a weighted averaging can be applied to increase the accuracy of the orientation estimate. Especially the rotation angle estimation of the second rotation is prone to errors caused by noisy sensor signals and/or inaccurate position estimates used to look up the magnetic map entries. The shorter the vectors $v_s$ and/or $v_p$ are, the less reliable the heading estimate based on magnetic field information. It is thus proposed in another embodiment to use the vector length $|v_s|$ or $|v_p|$ or any mathematical function thereof as weight information for the magnetic field heading estimate in a joint heading estimation process based on gyroscope and magnetic field information. Exemplary weights w are:

- 
$$(|v_s|) = |v_s|/|\tilde{m}_s|$$

- 
$$w(|v_p|) = |v_p|/|m_p|$$

- 
$$w(|v_s|) = |v_s|^2/\sigma_s^2$$

with sensor noise variance $\sigma_s^2$

$$w(|v_s|, |v_p|) = \min(|v_s|, |v_p|).$$

Many orientation algorithms using gyroscope and magnetic sensors (and potentially accelerometer) are based on an adaptive design (i.e. new orientation estimates are obtain based on the previous orientation estimate and the new incoming sensor data). Typically, a weighting factor $\beta$ controls the weight between the relative update based on the gyroscope and the absolute update based on the magnetometer (and potentially accelerometer). We propose to make this weighting factor $\beta$ dependent on the above factor w.

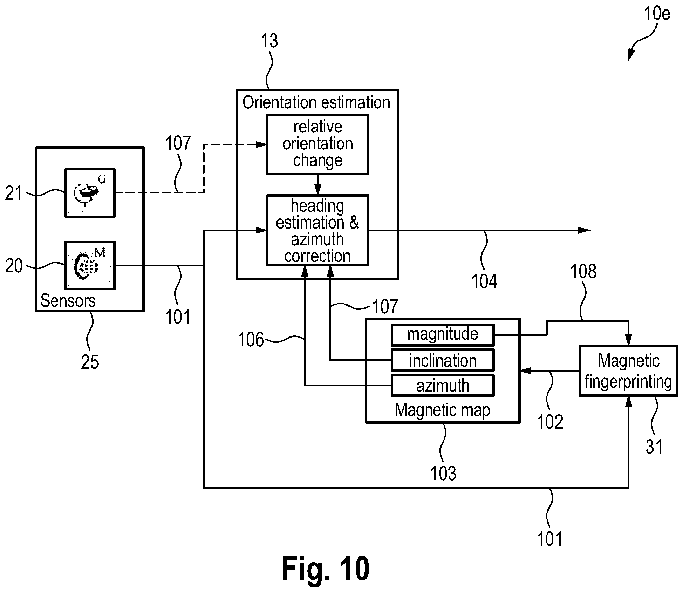

Fig. 10 shows a schematic diagram of a sixth embodiment of an orientation determination device 10e according to the present disclosure where magnetic fingerprinting is used for both orientation and location estimation. Here, the location in a magnetic fingerprinting unit 31 is estimated by comparing the current magnetic measurement 101 with the magnetic field data, in particular the magnitude 108 of the magnetic field, taken from the magnetic map 103. If the 3D orientation estimation is based on only the magnetic field sensor, only the magnitude 108 can be used for fingerprinting, as the inclination information is used already for the orientation estimation and this degree of freedom may not be used twice. In case of 2D heading estimation or with roll/pitch estimation the inclination might be used as well for position estimation using magnetic fingerprinting.

The devices and methods according to the present disclosure are especially suited for mobile and wearable devices due to today's availability of the required sensors (accelerometer, gyroscope, and magnetometer) in such devices and its low power consumption compared to other technologies such as Visual SLAM or wideband MIMO systems. The target(s) can be either indoor or outdoor, whereas the device is located indoor. Example applications are enhanced compass, which shows the relative distance and direction to target(s), and sound augmented reality (AR), according to which a virtual sound source is created at a specific location (or trajectory for moving targets) independent of the mobile device (user) location and heading.

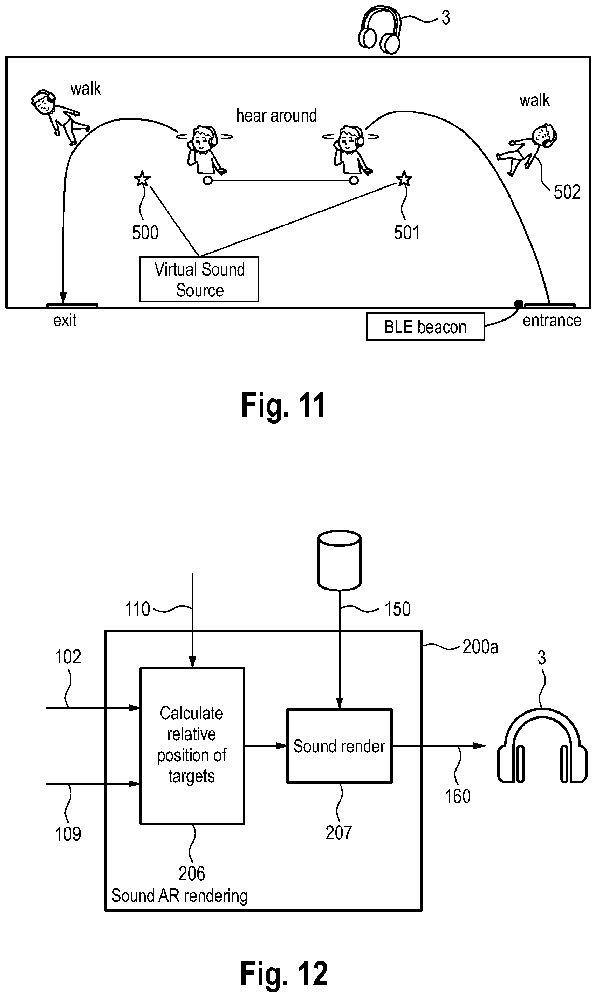

The rendering process described above will now be explained in more detail for two different embodiments illustrated in Figs. 11 and 12. Fig. 11 shows a diagram illustrating a sound AR application; Fig. 12 shows a diagram illustrating a corresponding embodiment of a rendering device 200a (the interfaces are not shown) for use in this application scenario, which may be embedded in a headphone 3. The position of the target(s), represented by the target information 110, corresponds to the virtual sound sources 500, 501 in this embodiment. In a first step, the relative position of the sound sources 500, 501 is calculated in a computation unit 206 based on the position estimate 102 and the orientation (or heading) information 109 of the user 502 and the position of the sound sources 500, 501. Next, the audio signals 150 of the sound sources 500, 501 and the position 110 of the sound sources 500, 501 relative to the user's position and orientation are used in a sound renderer 207 (e.g. Dolby surround or any other surround sound system ) to generate the sound signals 160 to be played back by the headphones 3. A beacon, e.g. a BLE (Bluetooth low energy) beacon at the entrance (and optionally exit) may be used to notice that a user enters the area in which this application scenario shall be used.

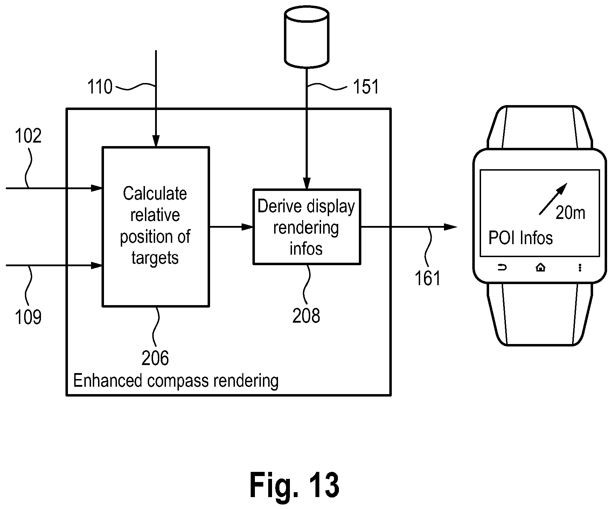

Fig. 13 shows a schematic diagram of a third embodiment of a rendering device 200b according to the present disclosure for use in a second application scenario, in particular for an enhanced compass application. Here, the position of the targets may correspond to any point(s) of interest (e.g. a certain store, product, Pokémon, treasure (gaming), person, etc.). Again, the relative position of the target(s) is calculated based on the position estimate 102 and the orientation (or heading) information 109 of the user and the position of the targets represented by the target information 110. Based on this result, some display information 161 by the display renderer 208 is derived, e.g. the heading towards the target relative to the device orientation (e.g. smartwatch or smartphone) and the distance. This information may be combined with some additional information 151 about the target to be illustrated on the display of e.g. the mobile device.

In another embodiment both applications may be combined to realize navigation by "follow sound source". Here, virtual sound sources guide the user in the direction of the point of interest, e.g. where the sound source appears at the location of the target itself (or direction of the target e.g. 5m away from the user).

The targets may be selected based on the current position estimate, e.g. by approaching a certain exhibition object in a museum some audio information is played back coming from the exhibition object. Also, the targets may move, e.g. some narrator is explaining something while walking (the voice appears to your right hand side as if a person is walking beside you, etc.). In case of the navigation by "follow sound source" the sound source may change depending on the user's current position, e.g. the sound appears in front of user in order to guide the user in the right direction. The sound source is updated to follow the navigation path: typically, the direct way to the target is not possible and the user has to follow some hallways or move around corners, etc.

Essential advantages can be achieved by the present disclosure:

- absolute heading (with respect to defined reference coordinate system) can be directly obtained from comparison of magnetic field measurement(s) with the location-specific magnetic map entry/entries (azimuth/orientation correction);
- magnetic map magnitude can be independently used to get position information based on magnetic fingerprinting;
- low power solution to obtain position and orientation information in buildings;
- required sensors (gyroscope, magnetometer) are widely available in today's mobile and wearable devices;
- no dedicated infrastructure required in the building (magnetic map of building is sufficient).

Thus, the foregoing discussion discloses and describes merely exemplary embodiments of the present disclosure. As will be understood by those skilled in the art, the present disclosure may be embodied in other specific forms without departing from the scope defined by the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such a software may also be distributed in other forms, such as via the Internet or other wired or wireless telecommunication systems.

The elements of the disclosed devices, apparatus and systems may be implemented by corresponding hardware and/or software elements, for instance appropriated circuits. A circuit is a structural assemblage of electronic components including conventional circuit elements, integrated circuits including application specific integrated circuits, standard integrated circuits, application specific standard products, and field programmable gate arrays. Further a circuit includes central processing units, graphics processing units, and microprocessors which are programmed or configured according to software code. A circuit does not include pure software, although a circuit includes the above-described hardware executing software.

**Claims**

1. An orientation determination device (10) comprising:

    - data input circuitry (11) configured to obtain magnetic field sensor data comprising at least two magnetic field measurements sensed by one or more magnetic field sensors (20a, 20b) at spatially separate positions and/or in separate frequency ranges and/or at different times and/or at different codes,
    - position input circuitry (12) configured to obtain a position estimate of the one or more positions of the one or more magnetic field sensors at which the magnetic field sensor data have been acquired, and
    - estimation circuitry (13) configured to derive, from a magnetic map, azimuth and inclination data at the one or more positions of the one or more magnetic field sensors indicated by the obtained position estimate and to estimate the orientation of the orientation determination device based on the obtained magnetic field sensor data and the azimuth and inclination data derived from the magnetic map,

    wherein said data input circuitry (11) is configured to obtain magnetic field sensor data comprising

    i) magnetic field measurements sensed by a single magnetic field sensor at different time instances and at spatially separate positions, wherein the orientation of the single magnetic field sensor at said spatially separate positions is fixed or tracked by an orientation sensor (21) forming a common sensor unit (25) together with the magnetic field sensor (20) or
    ii) magnetic field measurements sensed by a single magnetic field sensor in separate frequency ranges and/or at different times and/or at different codes, wherein one of said magnetic field measurements represents a magnetic beacon signal in a frequency range used by one or more magnetic beacons and/or emitted at a time used by one or more magnetic beacons and/or with a code used by one or more magnetic beacons.

2. The orientation determination device as claimed in claim 1,
    wherein said estimation circuitry (13) is configured to determine a rotation matrix that maps the obtained magnetic field sensor data onto the azimuth and inclination data derived from the magnetic map and to estimate the orientation of the orientation determination device by use of the inverse of the estimated rotation matrix.

3. The orientation determination device as claimed in claim 2,
    wherein said estimation circuitry (13) is configured to define the rotation matrix using a normalized 3D rotation axis and a rotation around the normalized 3D rotation axis by a rotation angle.

4. The orientation determination device as claimed in claim 3,
    wherein said estimation circuitry (13) is configured to define the rotation matrix R using a normalized 3D rotation axis $\boldsymbol{n}$ = $[n_1\ n_2\ n_3]^T$ and a rotation around the normalized 3D rotation axis n by a rotation angle $\alpha$ as

$$R(\boldsymbol{n}, \alpha)$$
$$= \begin{bmatrix} \cos(\alpha) + n_1^2\big(1 - \cos(\alpha)\big) & n_1 n_2\big(1 - \cos(\alpha)\big) - n_3 sin(\alpha) & n_1 n_3\big(1 - \cos(\alpha)\big) + n_2 sin(\alpha) \\ n_2 n_1\big(1 - \cos(\alpha)\big) + n_3 sin(\alpha) & \cos(\alpha) + n_2^2\big(1 - \cos(\alpha)\big) & n_2 n_3\big(1 - \cos(\alpha)\big) - n_1 sin(\alpha) \\ n_3 n_1\big(1 - \cos(\alpha)\big) - n_2 sin(\alpha) & n_3 n_2\big(1 - \cos(\alpha)\big) + n_1 sin(\alpha) & \cos(\alpha) + n_3^2\big(1 - \cos(\alpha)\big) \end{bmatrix}.$$

5. The orientation determination device as claimed in claim 2, 3 or 4,
    wherein said estimation circuitry (13) is configured to determine the rotation matrix by use of the relative rotation between the obtained magnetic field measurements.

6. The orientation determination device as claimed in any one of the preceding claims,
    wherein said estimation circuitry (13) is configured to determine a separate rotation matrix for each magnetic field measurement that maps the respective magnetic field measurement onto the azimuth and inclination data derived from the magnetic map and to estimate the orientation of the orientation determination device by use of the product of the separate rotation matrices.

7. The orientation determination device as claimed in any one of the preceding claims,
    further comprising position estimation circuitry (30) configured to estimate the position of the single magnetic field sensor, in particular based on one or more of

- information from a communication system, WiFi access points or beacons
- geomagnetic fingerprinting using the obtained magnetic field sensor data and the magnetic map,
- magnitude and/or inclination included in or derived from the obtained magnetic field sensor data, and
- an inclination estimate indicating the inclination of the single magnetic field sensor.

8. A rendering device (200) comprising:

   - one or more magnetic field sensors (20, 25) configured to sense magnetic field sensor data comprising at least two magnetic field measurements sensed at spatially separate positions and/or in separate frequency ranges and/or at different times and/or at different codes, and
   - an orientation determination device (10) as claimed in any one of the preceding claims to determine orientation information indicating the orientation of the rendering device,
   - position input circuitry (202) configured to obtain a position estimate of the rendering device,
   - target position input circuitry (203) configured to obtain target position information indicating a target position of one or more targets,
   - relative target position determination circuitry (204) configured to determine the relative position of the one or more targets with respect to the rendering device based on the orientation information, the obtained position estimate and the obtained target position information, and
   - rendering circuitry (205) configured to render target information related to the one or more targets using the determined relative position of the one or more targets.

9. The rendering device as claimed in claim 8,
   wherein the target positions of one or more targets are positions of virtual sound sources and wherein said rendering circuitry is configured to render audio signals in a way as if they were rendered at the position of said virtual sound sources.

10. The rendering device as claimed in claim 8,
    wherein said rendering circuitry (205) is configured to render display information indicating distance and/or direction to one or more of said targets.

11. The rendering device as claimed in any one of claims 8 to 10,
    further comprising target selection circuitry configured to select one or more targets based on the position estimate of the rendering device and/or an accelerometer configured to acquire accelerometer data and/or a gyroscope configured to acquire gyroscope data.

12. The rendering device as claimed in any one of claims 8 to 11,
    wherein said target position input circuitry (203) is configured to continuously, regularly or occasionally obtain a new target position.

13. An orientation determination method of an orientation determination device, said method comprising:

    - obtaining magnetic field sensor data comprising at least two magnetic field measurements sensed by one or more magnetic field sensors at spatially separate positions and/or in separate frequency ranges and/or at different times and/or at different codes,
    - obtaining a position estimate of the one or more positions of the one or more magnetic field sensors, at which the magnetic field sensor data have been acquired, and
    - deriving, from a magnetic map, azimuth and inclination data at the one or more positions of the one or more magnetic field sensors indicated by the obtained position estimate, and
    - estimating the orientation of the orientation determination device based on the obtained magnetic field sensor data and the azimuth and inclination data derived from the magnetic map,

    wherein the obtained magnetic field sensor data comprise

    i) magnetic field measurements sensed by a single magnetic field sensor at different time instances and at spatially separate positions, wherein the orientation of the single magnetic field sensor at said spatially separate positions is fixed or tracked by an orientation sensor forming a common sensor unit together with the magnetic field sensor or
    ii) magnetic field measurements sensed by a single magnetic field sensor in separate frequency ranges and/or at different times and/or at different codes, wherein one of said magnetic field measurements represents a magnetic beacon signal in a frequency range used by one or more magnetic beacons and/or emitted at a time used by one or more magnetic beacons and/or with a code used by one or more magnetic beacons.

14. A rendering method comprising:

- sensing magnetic field sensor data comprising at least two magnetic field measurements sensed at spatially separate positions and/or in separate frequency ranges and/or at different times and/or at different codes, and
- determining orientation information indicating the orientation of the rendering device by an orientation determination method as claimed in claim 13,
- obtaining a position estimate of the rendering device,
- obtaining target position information indicating a target position of one or more targets,
- determining the relative position of the one or more targets with respect to the rendering device based on the orientation information, the obtained position estimate and the obtained target position information, and
- rendering target information related to the one or more targets using the determined relative position of the one or more targets.

15. A computer program comprising program code means for causing a computer to perform the steps of said method according to claim 13 or 14 when said computer program is carried out on a computer.

**Patentansprüche**

1. Orientierungsbestimmungsvorrichtung (10), umfassend:

- Dateneingabeschaltung (11), die konfiguriert sind, um Magnetfeldsensordaten zu erhalten, umfassend mindestens zwei Magnetfeldmessungen, die durch einen oder mehrere Magnetfeldsensoren (20a, 20b) an räumlich getrennten Positionen und/oder in getrennten Frequenzbereichen und/oder zu unterschiedlichen Zeiten und/oder mit unterschiedlichen Codes abgetastet werden,
- eine Positionseingabeschaltung (12), die konfiguriert ist, um eine Positionsschätzung der einen oder der mehreren Positionen des einen oder der mehreren Magnetfeldsensoren zu erhalten, an denen die Magnetfeldsensordaten erfasst wurden, und
- eine Schätzschaltung (13), die konfiguriert ist, um, aus einer magnetischen Karte, Azimut- und Neigungsdaten an der einen oder den mehreren Positionen des einen oder der mehreren Magnetfeldsensoren abzuleiten, die

durch die erhaltene Positionsschätzung angegeben werden, und um die Orientierung der Orientierungsbestimmungsvorrichtung basierend auf den erhaltenen Magnetfeldsensordaten und den Azimut- und Neigungsdaten abzuschätzen, die aus der magnetischen Karte abgeleitet werden, wobei die Dateneingabeschaltung (11) konfiguriert ist, um Magnetfeldsensordaten zu erhalten, umfassend

i) Magnetfeldmessungen, die durch einen einzigen Magnetfeldsensor zu unterschiedlichen Zeitpunkten und an räumlich getrennten Positionen abgetastet werden, wobei die Orientierung des einzigen Magnetfeldsensors an den räumlich getrennten Positionen durch einen Orientierungssensor (21) festgelegt oder verfolgt wird, der zusammen mit dem Magnetfeldsensor (20) eine gemeinsame Sensoreinheit (25) ausbildet, oder
ii) Magnetfeldmessungen, die durch einen einzelnen Magnetfeldsensor in getrennten Frequenzbereichen und/oder zu unterschiedlichen Zeiten und/oder mit unterschiedlichen Codes abgetastet werden, wobei eine der Magnetfeldmessungen ein Magnetbakensignal in einem Frequenzbereich darstellt, der durch einen oder mehrere Magnetbaken verwendet wird, und/oder zu einer Zeit, die durch einen oder mehrere Magnetbaken verwendet wird, und/oder mit einem Code emittiert wird, der durch einen oder mehrere Magnetbaken verwendet wird.

2. Orientierungsbestimmungsvorrichtung nach Anspruch 1,
wobei die Schätzschaltung (13) konfiguriert ist, um eine Rotationsmatrix zu bestimmen, die die erhaltenen Magnetfeldsensordaten auf die Azimut- und Neigungsdaten abbildet, die aus der magnetischen Karte abgeleitet werden, und um die Orientierung der Orientierungsbestimmungsvorrichtung durch Verwenden der Inversen der geschätzten Rotationsmatrix zu schätzen.

3. Orientierungsbestimmungsvorrichtung nach Anspruch 2,

wobei die Schätzschaltung (3) konfiguriert ist, um die Rotationsmatrix unter Verwendung einer normalisierten 3D-Rotationsachse und einer Rotation um die normalisierte 3D-Rotationsachse herum um einen Rotationswinkel zu definieren.

4. Orientierungsbestimmungsvorrichtung nach Anspruch 3,
   wobei die Schätzschaltung (13) konfiguriert ist, um die Rotationsmatrix R unter Verwendung einer normalisierten 3D-Rotationsachse $\boldsymbol{n} = [n_1\ n_2\ n_3]^T$ und einer Rotation um die normalisierte 3D-Rotationsachse n herum um einen Rotationswinkel $\alpha$ als

$$R(\boldsymbol{n}, \alpha)$$
$$= \begin{bmatrix} \cos(\alpha) + n_1^2\big(1 - \cos(\alpha)\big) & n_1 n_2\big(1 - \cos(\alpha)\big) - n_3 sin(\alpha) & n_1 n_3\big(1 - \cos(\alpha)\big) + n_2 sin(\alpha) \\ n_2 n_1\big(1 - \cos(\alpha)\big) + n_3 sin(\alpha) & \cos(\alpha) + n_2^2\big(1 - \cos(\alpha)\big) & n_2 n_3\big(1 - \cos(\alpha)\big) - n_1 sin(\alpha) \\ n_3 n_1\big(1 - \cos(\alpha)\big) - n_2 sin(\alpha) & n_3 n_2\big(1 - \cos(\alpha)\big) + n_1 sin(\alpha) & \cos(\alpha) + n_3^2\big(1 - \cos(\alpha)\big) \end{bmatrix}$$

zu definieren.

5. Orientierungsbestimmungsvorrichtung nach Anspruch 2, 3 oder 4,
   wobei die Schätzschaltung (13) konfiguriert ist, um die Rotationsmatrix durch Verwenden der relativen Rotation zwischen den erhaltenen Magnetfeldmessungen zu bestimmen.

6. Orientierungsbestimmungsvorrichtung nach einem der vorstehenden Ansprüche,
   wobei die Schätzschaltung (13) konfiguriert ist, um für jede Magnetfeldmessung eine getrennte Rotationsmatrix zu bestimmen, die die jeweilige Magnetfeldmessung auf die Azimut- und Neigungsdaten abbildet, die aus der magnetischen Karte abgeleitet werden, und die Orientierung der Orientierungsbestimmungsvorrichtung durch Verwenden des Produkts der getrennten Rotationsmatrizen zu schätzen.

7. Orientierungsbestimmungsvorrichtung nach einem der vorstehenden Ansprüche,
   ferner umfassend eine Positionsschätzschaltung (30), die konfiguriert ist, um die Position des einzelnen Magnetfeldsensors zu schätzen, insbesondere basierend auf einem oder mehreren von

   - Informationen von einem Kommunikationssystem, WLAN-Zugangspunkten oder Baken
   - einem geomagnetischen Fingerabdrucknehmen unter Verwendung der erhaltenen Magnetfeldsensordaten und der magnetischen Karte,
   - Größe und/oder Neigung, die in den erhaltenen Magnetfeldsensordaten eingeschlossen sind oder aus diesen abgeleitet werden, und
   - eine Neigungsschätzung, die die Neigung des einzelnen Magnetfeldsensors angibt.

8. Rendering-Vorrichtung (200), umfassend:

   - einen oder mehrere Magnetfeldsensoren (20, 25), die konfiguriert sind, um Magnetfeldsensordaten abzutasten, umfassend mindestens zwei Magnetfeldmessungen, die an räumlich getrennten Positionen und/oder in getrennten Frequenzbereichen und/oder zu unterschiedlichen Zeiten und/oder mit unterschiedlichen Codes abgetastet werden, und
   - eine Orientierungsbestimmungsvorrichtung (10) nach einem der vorstehenden Ansprüche, um Orientierungsinformationen zu bestimmen, die die Orientierung der Rendering-Vorrichtung angeben,
   - eine Positionseingabeschaltung (202), die konfiguriert ist, um eine Positionsschätzung der Rendering-Vorrichtung zu erhalten,
   - eine Zielpositionseingabeschaltung (203), die konfiguriert ist, um Zielpositionsinformationen zu erhalten, die eine Zielposition eines oder mehrerer Ziele angeben,
   - eine Schaltung (204) für eine Bestimmung der relativen Zielposition, die konfiguriert ist, um die relative Position des einen oder der mehreren Ziele hinsichtlich der Rendering-Vorrichtung basierend auf den Orientierungsinformationen, der erhaltenen Positionsschätzung und den erhaltenen Zielpositionsinformationen zu bestimmen, und
   - eine Rendering-Schaltung (205), die konfiguriert ist, um Zielinformationen bezüglich des einen oder der mehreren Ziele unter Verwendung der bestimmten relativen Position des einen oder der mehreren Ziele zu rendern.

**9.** Rendering-Vorrichtung nach Anspruch 8,
wobei die Zielpositionen eines oder mehrerer Ziele Positionen virtueller Tonquellen sind und wobei die Rendering-Schaltung konfiguriert ist, um Audiosignale auf eine Weise zu rendern, als ob sie an der Position der virtuellen Tonquellen gerendert worden wären.

**10.** Rendering-Vorrichtung nach Anspruch 8,
wobei die Rendering-Schaltung (205) konfiguriert ist, um Anzeigeinformationen zu rendern, die eine Distanz und/oder Richtung zu einem oder mehreren der Ziele angeben.

**11.** Rendering-Vorrichtung nach einem der Ansprüche 8 bis 10,
ferner umfassend eine Zielauswahlschaltung, die konfiguriert ist, um ein oder mehrere Ziele basierend auf der Positionsschätzung der Rendering-Vorrichtung auszuwählen, und/oder einen Beschleunigungsmesser, der konfiguriert ist, um Beschleunigungsmesserdaten zu erfassen, und/oder ein Gyroskop, das konfiguriert ist, um Gyroskopdaten zu erfassen.

**12.** Rendering-Vorrichtung nach einem der Ansprüche 8 bis 11,
wobei die Zielpositionseingabeschaltung (203) konfiguriert ist, um kontinuierlich, regelmäßig oder gelegentlich eine neue Zielposition zu erhalten.

**13.** Orientierungsbestimmungsverfahren einer Orientierungsbestimmungsvorrichtung, das Verfahren umfassend:

- Erhalten von Magnetfeldsensordaten, umfassend mindestens zwei Magnetfeldmessungen, die durch einen oder mehrere Magnetfeldsensoren an räumlich getrennten Positionen und/oder in getrennten Frequenzbereichen und/oder zu unterschiedlichen Zeiten und/oder mit unterschiedlichen Codes abgetastet werden,
- Erhalten einer Positionsschätzung der einen oder der mehreren Positionen der einen oder der mehreren Magnetfeldsensoren, an denen die Magnetfeldsensordaten erfasst wurden, und
- Ableiten, aus einer magnetischen Karte, von Azimut- und Neigungsdaten an der einen oder den mehreren Positionen des einen oder der mehreren Magnetfeldsensoren, die durch die erhaltene Positionsschätzung angegeben werden, und
- Schätzen der Orientierung der Orientierungsbestimmungsvorrichtung basierend auf den erhaltenen Magnetfeldsensordaten und den Azimut- und Neigungsdaten, die aus der Magnetkarte abgeleitet werden,

wobei die erhaltenen Magnetfeldsensordaten umfassen

i) Magnetfeldmessungen, die durch einen einzigen Magnetfeldsensor zu unterschiedlichen Zeitpunkten und an räumlich getrennten Positionen abgetastet werden, wobei die Orientierung des einzigen Magnetfeldsensors an den räumlich getrennten Positionen durch einen Orientierungssensor festgelegt oder verfolgt wird, der zusammen mit dem Magnetfeldsensor eine gemeinsame Sensoreinheit ausbildet, oder
ii) Magnetfeldmessungen, die durch einen einzelnen Magnetfeldsensor in getrennten Frequenzbereichen und/oder zu unterschiedlichen Zeiten und/oder mit unterschiedlichen Codes abgetastet werden, wobei eine der Magnetfeldmessungen ein Magnetbakensignal in einem Frequenzbereich darstellt, der durch einen oder mehrere Magnetbaken verwendet wird, und/oder zu einer Zeit, die durch eine oder mehrere Magnetbaken verwendet wird, und/oder mit einem Code emittiert wird, der durch einen oder mehrere Magnetbaken verwendet wird.

**14.** Rendering-Verfahren, umfassend:

- Abtasten von Magnetfeldsensordaten, umfassend mindestens zwei Magnetfeldmessungen, die an räumlich getrennten Positionen und/oder in getrennten Frequenzbereichen und/oder zu unterschiedlichen Zeiten und/oder mit unterschiedlichen Codes abgetastet werden, und
- Bestimmen von Orientierungsinformationen, die die Orientierung der Rendering-Vorrichtung angeben, durch ein Orientierungsbestimmungsverfahren nach Anspruch 13,
- Erhalten einer Positionsschätzung der Rendering-Vorrichtung,
- Erhalten von Zielpositionsinformationen, die eine Zielposition eines oder mehrerer Ziele angeben,
- Bestimmen der relativen Position des einen oder der mehreren Ziele hinsichtlich der Rendering-Vorrichtung basierend auf den Orientierungsinformationen, der erhaltenen Positionsschätzung und den erhaltenen Zielpositionsinformationen, und
- Rendern von Zielinformationen bezüglich des einen oder der mehreren Ziele unter Verwendung der bestimmten relativen Position des einen oder der mehreren Ziele.

**15.** Computerprogramm, umfassend Programmcodemittel zum Veranlassen eines Computers, die Schritte des Verfahrens nach Anspruch 13 oder 14 durchzuführen, wenn das Computerprogramm auf einem Computer ausgeführt wird.

## Revendications

**1.** Dispositif de détermination d'orientation (10) comprenant:

- un système de circuits d'entrée de données (11) configuré pour obtenir des données de capteur de champ magnétique comprenant au moins deux mesures de champ magnétique captées par un ou plusieurs capteurs de champ magnétique (20a, 20b) au niveau de positions séparées dans l'espace et/ou dans des plages de fréquences séparées et/ou à des moments différents et/ou à des codes différents,
- un système de circuits d'entrée de position (12) configuré pour obtenir une estimation de position de la ou des positions du ou des capteurs de champ magnétique au niveau desquelles les données de capteur de champ magnétique ont été acquises, et
- un système de circuits d'estimation (13) configuré pour dériver, à partir d'une carte magnétique, des données d'azimut et d'inclinaison au niveau de la ou des positions du ou des capteurs de champ magnétique indiquées par l'estimation de position obtenue et pour estimer l'orientation du dispositif de détermination d'orientation en fonction des données de capteur de champ magnétique obtenues et de données d'azimut et d'inclinaison dérivées de la carte magnétique, dans

lequel ledit système de circuits d'entrée de données (11) est configuré pour obtenir des données de capteur de champ magnétique comprenant

i) des mesures de champ magnétique captées par un unique capteur de champ magnétique à différentes instances de temps et au niveau de positions séparées dans l'espace, dans lequel l'orientation de l'unique capteur de champ magnétique au niveau desdites positions séparées dans l'espace est fixe ou suivie par un capteur d'orientation (21) formant une unité de capteur commune (25) conjointement avec le capteur de champ magnétique (20) ou

ii) des mesures de champ magnétique captées par un unique capteur de champ magnétique dans des plages de fréquences séparées et/ou à des moments différents et/ou à des codes différents, dans lequel l'une desdites mesures de champ magnétique représente un signal de balise magnétique dans une plage de fréquence utilisée par une ou plusieurs balises magnétiques et/ou émis à un moment utilisé par une ou plusieurs balises magnétiques et/ou avec un code utilisé par une ou plusieurs balises magnétiques.

**2.** Dispositif de détermination d'orientation selon la revendication 1, dans lequel ledit système de circuits d'estimation (13) est configuré pour déterminer une matrice de rotation qui cartographie les données de capteur de champ magnétique obtenues sur les données d'azimut et d'inclinaison dérivées de la carte magnétique et pour estimer l'orientation du dispositif de détermination d'orientation par l'utilisation de l'inverse de la matrice de rotation estimée.

**3.** Dispositif de détermination d'orientation selon la revendication 2, dans lequel ledit système de circuits d'estimation (3) est configuré pour définir la matrice de rotation à l'aide d'un axe de rotation 3D normalisé et d'une rotation autour de l'axe de rotation 3D normalisé selon un angle de rotation.

**4.** Dispositif de détermination d'orientation selon la revendication 3, dans lequel ledit système de circuits d'estimation (13) est configuré pour définir la matrice de rotation R à l'aide d'un axe de rotation 3D normalisé $\boldsymbol{n} = [n_1\ n_2\ n_3]^T$ et d'une rotation autour de l'axe de rotation 3D normalisé $\boldsymbol{n}$ selon un angle de rotation $\alpha$ en tant que

$$R(n, \alpha)$$

$$= \begin{bmatrix} \cos(\alpha) + n_1^2(1 - \cos(\alpha)) & n_1 n_2(1 - \cos(\alpha)) - n_3 \sin(\alpha) & n_1 n_3(1 - \cos(\alpha)) + n_2 \sin(\alpha) \\ n_2 n_1(1 - \cos(\alpha)) + n_3 \sin(\alpha) & \cos(\alpha) + n_2^2(1 - \cos(\alpha)) & n_2 n_3(1 - \cos(\alpha)) - n_1 \sin(\alpha) \\ n_3 n_1(1 - \cos(\alpha)) - n_2 \sin(\alpha) & n_3 n_2(1 - \cos(\alpha)) + n_1 \sin(\alpha) & \cos(\alpha) + n_3^2(1 - \cos(\alpha)) \end{bmatrix}.$$

**5.** Dispositif de détermination d'orientation selon la revendication 2, 3 ou 4, dans lequel ledit système de circuits d'estimation (13) est configuré pour déterminer la matrice de rotation par l'utilisation de la rotation relative entre les mesures de champ magnétique obtenues.

**6.** Dispositif de détermination d'orientation selon l'une quelconque des revendications précédentes, dans lequel ledit système de circuits d'estimation (13) est configuré pour déterminer une matrice de rotation séparée pour chaque mesure de champ magnétique qui cartographie la mesure de champ magnétique respective sur les données d'azimut et d'inclinaison dérivées de la carte magnétique et pour estimer l'orientation du dispositif de détermination d'orientation par l'utilisation du produit des matrices de rotation séparées.

**7.** Dispositif de détermination d'orientation selon l'une quelconque des revendications précédentes, comprenant en outre un système de circuits d'estimation de position (30) configuré pour estimer la position de l'unique capteur de champ magnétique, en particulier en fonction d'un ou plusieurs parmi

- des informations en provenance d'un système de communication, de points d'accès WiFi ou de balises
- l'établissement d'empreintes géomagnétiques à l'aide des données de capteur de champ magnétique obtenues et de la carte magnétique,
- une grandeur et/ou une inclinaison incluses dans les, ou dérivées des, données de capteur de champ magnétique obtenues, et
- une estimation d'inclinaison indiquant l'inclinaison de l'unique capteur de champ magnétique.

**8.** Dispositif de restitution (200) comprenant:

- un ou plusieurs capteurs de champ magnétique (20, 25) configurés pour capter des données de capteur de champ magnétique comprenant au moins deux mesures de champ magnétique captées au niveau de positions séparées dans l'espace et/ou dans des plages de fréquences séparées et/ou à des moments différents et/ou à des codes différents, et
- un dispositif de détermination d'orientation (10) selon l'une quelconque des revendications précédentes pour déterminer des informations d'orientation indiquant l'orientation du dispositif de restitution,
- un système de circuits d'entrée de position (202) configuré pour obtenir une estimation de position du dispositif de restitution,
- un système de circuits d'entrée de position de cible (203) configuré pour obtenir des informations de position de cible indiquant une position de cible d'une ou plusieurs cibles,
- un système de circuits de détermination de position relative de cible (204) configuré pour déterminer la position relative de la ou des cibles par rapport au dispositif de restitution en fonction des informations d'orientation, de l'estimation de position obtenue et des informations de position de cible obtenues, et
- un système de circuits de restitution (205) configuré pour restituer des informations de cible apparentées à la ou aux cibles à l'aide de la position relative déterminée de la ou des cibles.

**9.** Dispositif de restitution selon la revendication 8, dans lequel les positions de cible d'une ou plusieurs cibles sont des positions de sources sonores virtuelles et dans lequel ledit système de circuits de restitution est configuré pour restituer des signaux audio de la même façon que s'ils étaient restitués au niveau de la position desdites sources sonores virtuelles.

**10.** Dispositif de restitution selon la revendication 8, dans lequel ledit système de circuits de restitution (205) est configuré pour restituer des informations d'affichage indiquant une distance et/ou une direction vers une ou plusieurs desdites cibles.

**11.** Dispositif de restitution selon l'une quelconque des revendications 8 à 10, comprenant en outre un système de circuits de sélection de cible configuré pour sélectionner une ou plusieurs cibles en fonction de l'estimation de position du dispositif de restitution et/ou d'un accéléromètre configuré pour acquérir des données d'accéléromètre et/ou d'un gyroscope configuré pour acquérir des données de gyroscope.

12. Dispositif de restitution selon l'une quelconque des revendications 8 à 11, dans lequel ledit système de circuits d'entrée de position cible (203) est configuré pour obtenir de façon continue, régulière ou occasionnelle une nouvelle position de cible.

13. Procédé de détermination d'orientation d'un dispositif de détermination d'orientation, ledit procédé comprenant:

- l'obtention de données de capteur de champ magnétique comprenant au moins deux mesures de champ magnétique captées par un ou plusieurs capteurs de champ magnétique au niveau de positions séparées dans l'espace et/ou dans des plages de fréquences séparées et/ou à des moments différents et/ou à des codes différents,
- l'obtention d'une estimation de position de la ou des positions du ou des capteurs de champ magnétique, au niveau de laquelle les données de capteur de champ magnétique ont été acquises, et
- la dérivation, à partir d'une carte magnétique, de données d'azimut et d'inclinaison au niveau de la ou des positions du ou des capteurs de champ magnétique indiquées par l'estimation de position obtenue, et
- l'estimation de l'orientation du dispositif de détermination d'orientation en fonction des données de capteur de champ magnétique obtenues et des données d'azimut et d'inclinaison dérivées de la carte magnétique,

dans lequel les données de capteur de champ magnétique obtenues comprennent

i) des mesures de champ magnétique captées par un unique capteur de champ magnétique à différentes instances de temps et au niveau de positions séparées dans l'espace, dans lequel l'orientation de l'unique capteur de champ magnétique au niveau desdites positions séparées dans l'espace est fixe ou suivie par un capteur d'orientation formant une unité de capteur commune conjointement avec le capteur de champ magnétique ou

ii) des mesures de champ magnétique captées par un unique capteur de champ magnétique dans des plages de fréquences séparées et/ou à des moments différents et/ou à des codes différents, dans lequel l'une desdites mesures de champ magnétique représente un signal de balise magnétique dans une plage de fréquence utilisée par une ou plusieurs balises magnétiques et/ou émis à un moment utilisé par une ou plusieurs balises magnétiques et/ou avec un code utilisé par une ou plusieurs balises magnétiques.

14. Procédé de restitution comprenant:

- le captage de données de capteur de champ magnétique comprenant au moins deux mesures de champ magnétique captées au niveau de positions séparées dans l'espace et/ou dans des plages de fréquences séparées et/ou à des moments différents et/ou à des codes différents, et
- la détermination d'informations d'orientation indiquant l'orientation du dispositif de restitution par un procédé de détermination d'orientation selon la revendication 13,
- l'obtention d'une estimation de position du dispositif de restitution,
- l'obtention d'informations de position de cible indiquant une position de cible d'une ou plusieurs cibles,
- la détermination de la position relative de la ou des cibles par rapport au dispositif de restitution en fonction des informations d'orientation, de l'estimation de position obtenue et des informations de position de cible obtenues, et
- la restitution d'informations de cible apparentées à la ou aux cibles à l'aide de la position relative déterminée de la ou des cibles.

15. Programme d'ordinateur comprenant un moyen de code de programme permettant d'amener un ordinateur à mettre en œuvre les étapes dudit procédé selon la revendication 13 ou 14 lorsque ledit programme d'ordinateur est exécuté sur un ordinateur.

| Abbreviation | Name |
|---|---|
| x | x component |
| y | y component |
| z | z component |
| m | magnitude |
| i | inclination |
| a | azimuth |
| h | horizontal |
| v | vertical |

Equivalent representations:

$$hv \overset{eq.}{\Leftrightarrow} mi$$

$$xyz \overset{eq.}{\Leftrightarrow} mia$$

## Fig. 1

## Fig. 2

Fig. 3

azimuth (a) in deg

Fig. 4

Fig. 5

**Fig. 6**

**Fig. 7**

10c

13

Sensor

101

20

Orientation
estimation &
azim./incl.
correction

104

105

106

magnitude

inclination

azimuth

Magnetic map

103

Location
estimation

102

**Fig. 8**

10d

13

Orientation estimation

relative
orientation
change

107

21

20

Sensors

25

101

heading
estimation &
azimuth
correction

104

102a

105

106

magnitude

inclination

azimuth

Magnetic map

103

Location estimate
sensor 1

Location estimate
sensor 1

102b

**Fig. 9**

Fig. 10

## Fig. 11

## Fig. 12

110 — 151

102

Calculate relative position of targets

Derive display rendering infos

POI Infos
20m

161

109

206

208

Enhanced compass rendering

**Fig. 13**

**EP 3 701 224 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015260524 A1
- US 6549004 B1
- WO 2009128859 A1